**Europäisches Patentamt**

**European Patent Office**

**Office européen des brevets**

(19)

(11) Publication number: **0 167 284**
**B1**

(12) **EUROPEAN PATENT SPECIFICATION**

(45) Date of publication of patent specification: **18.10.89**

(21) Application number: **85303887.5**

(22) Date of filing: **03.06.85**

(51) Int. Cl.⁴: **G 11 B 20/18**

(54) **Method for testing components of a magnetic storage system.**

(30) Priority: **05.06.84 US 617437**

(43) Date of publication of application:
**08.01.86 Bulletin 86/02**

(45) Publication of the grant of the patent:
**18.10.89 Bulletin 89/42**

(84) Designated Contracting States:
**DE FR GB**

(56) References cited:
**US-A-3 686 682**
**US-A-3 996 612**
**US-A-4 142 215**

(73) Proprietor: **UNISYS CORPORATION**
**1, Burroughs Place**
**Detroit Michigan 48232 (US)**

(72) Inventor: **Sordello, Frank J.**
**726 Bicknell Road**
**Los Gatos California 95030 (US)**
Inventor: **Rose, Andrew M.**
**2501 Mardell Way**
**Mountain View California 94043 (US)**

(74) Representative: **Kirby, Harold Douglas Benson**
**et al**
**G.F. Redfern & Company Marlborough Lodge 14**
**Farncombe Road**
**Worthing West Sussex BN11 2BT (GB)**

Courier Press, Leamington Spa, England.

## Description

Reference to related patent application

Our concurrently filed European patent application EP—A—168155 for Method for Testing Components of a Magnetic Storage System contains related subject matter.

Background of the invention

The present invention relates to an improved method for testing components in a magnetic disk storage system, and more particularly relates to testing components in a system employing a thin film magnetic head.

As is well known, disk drives are an important part of most modern day computer systems. A disk drive typically employs one or more read/write magnetic heads whose performance is critical to the obtaining of satisfactory performance of the overall disk drive. It is thus of considerable importance, particularly for high volume head manufacturing, to provide for the rapid, accurate and reliable testing of the performance of a magnetic head. The provision of such testing is especially important in connection with the manufacture of new types of magnetic heads, such as thin film heads, which have different characteristics than conventional ferrite heads, and for which there is very little field experience.

An important characteristic indicative of the performance of a magnetic head is conventionally known as "bit shift" (also called peak shift) which is usually a result of the density of recording, the nature of the pattern being recorded, and also the presence of noise. As is well known, bit shift causes a bit to be detected at a time shifted by a certain amount from the expected time of detection, which if sufficiently large compared to the bit-cell time can cause data errors in a magnetic recording and reproducing system.

Another important characteristic indicative of the performance of a magnetic head is head timing asymmetry. The presence of head timing asymmetry is indicated, for example, when unwanted readback signal timing differences are produced dependent on the direction of change of the recorded magnetic transitions. Such head timing asymmetry can also be a source of unwanted bit shift.

Known approaches for measuring bit shift and head timing asymmetry have typically employed indirect techniques, such as by using reproduction frequency response measurements to determine "resolution", or by the use of isolated pulse superposition techniques. These known approaches have various disadvantages, such as being unduly time consuming, expensive and/or complex. In addition, the resolution approach can give quite inaccurate results when used for measuring the characteristics of thin film heads.

U.S. Patent 3,686,682 discloses a method and apparatus whereby ordinary peak shift is measured on a disk, and the number of pulses recorded on a track whose peak shift exceeds predetermined limits is counted. A test pattern is employed having isolated pairs of transitions provided in the recording. This United States patent shows no means whereby the important measured property of asymmetry can be discovered and further, by counting pulses, looses much statistical information concerning the distribution of timing errors.

U.S. Patent 4,142,215 discloses means for triggering an oscilloscope to display first and second mutually inverse recovered test patterns from a tape together on the oscilloscope screen for adjustment of the tape drive unit until the displayed wave forms agree with acceptable limits. This United States patent is silent upon any means whereby asymmetry can be measured using a test pattern and its reverse.

It is accordingly a primary object of the present invention to provide an improved method for testing magnetic recording and reproducing components which is simple, rapid, accurate and reliable, which can be used for testing most types of magnetic heads (including thin film heads) as well as the magnetic medium, the reproduction system and various combinations thereof, and which comprises measuring the head timing asymmetry of a magnetic head.

Thus the present invention relates to a method for measuring the properties of a magnetic storage system having a magnetic storage medium traversed by a magnetic head, the method including the steps of: recording a test pattern on a track on the medium, the test pattern having a plurality of manifestations of a first type each comprising a magnetic transition of a first sense alternating with manifestations of a second type each comprising a magnetic transition of a second sense opposite to said first sense; employing said head to recover signals from said test pattern; and measuring time between the peaks of the recovered signal to measure deviation from an ideal value.

The invention is characterised in that said test pattern comprises a plurality of first intervals each substantially equal to a first predetermined period which is relatively long and each commenced by a manifestation of said first type and terminated by a manifestation of said second type; a plurality of second intervals each substantially equal to said first predetermined period and each commenced by a manifestation of said second type and terminated by a manifestation of said first type; a plurality of third intervals each substantially equal to a second predetermined period which is relatively short and each commenced by a manifestation of said second type and terminated by a manifestation of said first type; and a plurality of fourth intervals each substantially equal to said second predetermined period and each commenced by a manifestation of said first type and terminated by a manfestation of said second type; and in that said method further includes making first measurements of the difference between each first interval of the test pattern and the time elapsing between the recovered signal peaks corresponding to each first interval and the difference between the second interval of the test pattern and the time elapsing between the peaks corresponding to each second interval; making second measurements of the difference between the time elapsing between the recovered signal peaks corresponding respectively to the commencement of each first interval and the termination of each third interval and the respective interval of the test pattern and between the time elapsing between the recovered signal peaks corresponding respectively to the commencement of each second interval and the termination of each fourth interval and the respective interval of the test pattern, and comparing said first and second measurements.

The specific nature of the invention as well as other features, objects, advantages and uses thereof will become apparent from the following description of a particular preferred embodiment of the invention in conjunction with the accompanying drawings.

Brief description of the drawings

Fig. 1 is a timing graph illustrating the recording patterns employed in a preferred embodiment of the invention.

Fig. 2 is a timing graph illustrating the detected readback pulses produced by an exemplary system in response to the recorded pattern of Fig. 1.

Fig. 3 is a block and schematic diagram illustrating a preferred embodiment used for testing the performance of magnetic heads in accordance with the invention.

Fig. 4 illustrates exemplary apparatus which may be provided in the analyzer 40 of Fig. 3 for measuring pattern induced bit shift.

Fig. 5 illustrates exemplary apparatus which may be provided in the analyzer 40 of Fig. 3 for measuring noise induced bit shift.

Fig. 6 illustrates exemplary apparatus which may be provided in the analyzer 40 of Fig. 3 for measuring timing asymmetry.

Fig. 7 illustrates exemplary apparatus which may be provided in the analyzer 40 of Fig. 3 for measuring bit shift caused by noise.

Fig. 8 illustrates a modification of the embodiment of Fig. 1 which additionally provides for calibrating the system.

Description of a preferred embodiment

Like characters and numerals refer to like elements throughout the figures of the drawings.

As is well known, a magnetic head writes data on a rotating magnetic disk by magnetizing small regions of a magnetic film as the disk rotates. The areas where the direction of magnetism changes are called magnetic transitions of flux reversals. Conventional non-"thin-film" read-write magnetic heads may have ferrite or mu-metal read-write elements and are mounted on a slider made of ceramic or bulk ferrite. The aerodynamic portion slider is typically shaped by grinding and lapping. Glass bonding is conventionally used to form the elements of the magnetic poles as well as the read-write gap. The read-write coil is wirewound. On the other hand, a thin film read-write magnetic head is typically made by depositing the magnetic elements of the head by sputtering, evaporation or plating on a substrate that typically is later machined into the aerodynamic portions of the air-bearing slider.

Besides signal amplitude, other important characteristics of the read-write process performed by a magnetic head in conjunction with the other parts of the system are the signal-to-noise ratio and the timing of the signal. In order to read a magnetic transition in its correct time position, it must be detected within an interval known as the bit-cell time. If a timing error exceeds a certain portion of this bit-cell time, a data error may occur.

Several factors contribute to timing errors, the most significant being commonly referred to as bit-shift or peak-shift. Simply stated, bit-shift is the difference between the time that a previously written magnetic transition is detected upon readback and the time at which the magnetic transition should have been detected. Bit-shift is typically of two major types: (1) pattern induced bit shift and (2) noise induced bit shift.

Pattern induced bit-shift is produced when adjacently recorded transitions along the recorded track are sufficiently close to cause shifts in the locations of the peaks of the readback signal. Bit shift as caused by the head is due to the fact that the head senses any and all magnetic fields that induce flux through the magnetic path of the head. When bits are recorded at high densities, the head tends to pick up not only the field from the immediate recorded bit, but also the fields from the adjacent bits along the recorded track. The head output is, therefore, representative of the combined fields, which induces bit shift in the apparent location of the immediate bit. Pattern induced bit shift may also be produced as a result of head timing asymmetry, since bit shifts may occur as a result of readback signal timing differences caused by the head responding differently to different directions of change of the magnetic transitions.

Generally, as bit density increases, so does the bit-shift. Eventually, as bit density is increased, the bit-shift gets so large as to prevent reliable reading of the written data. Noise induced bit-shift also affects the locations of the peaks in the readback signal, but usually in a random manner.

It will thus be appreciated that the bit-shift performance in a magnetic recording and reproducing system is a very import characteristic to be tested in order to determine whether the system is satisfactory. In accordance with the present invention, a rapid, reliable, accurate and relatively simple method and apparatus are provided for measuring bit-shift and timing asymmetry as well as other important system characteristics.

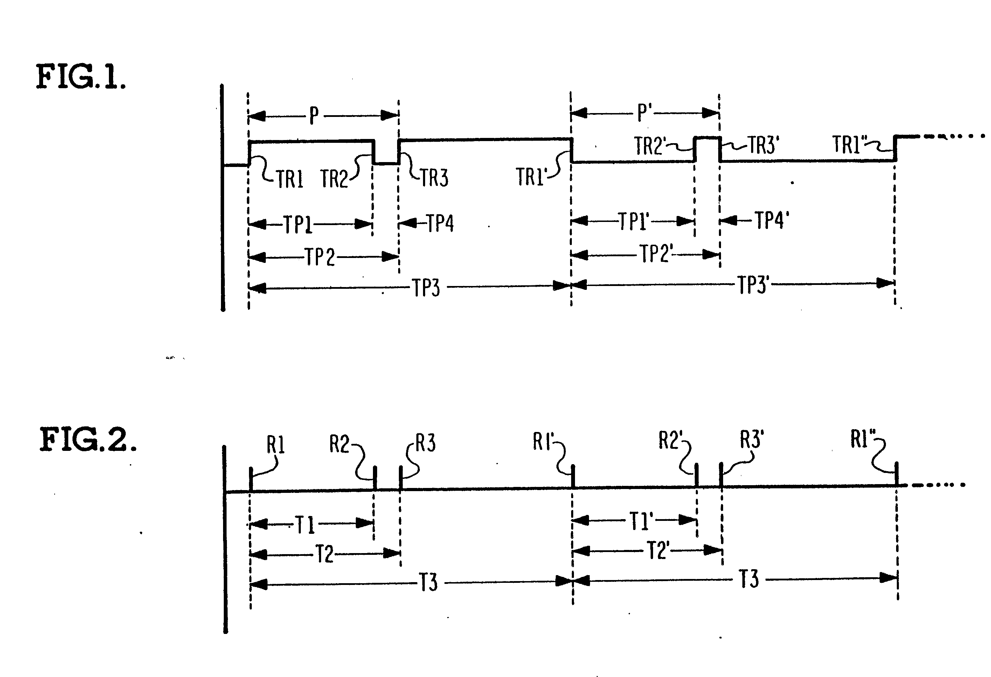

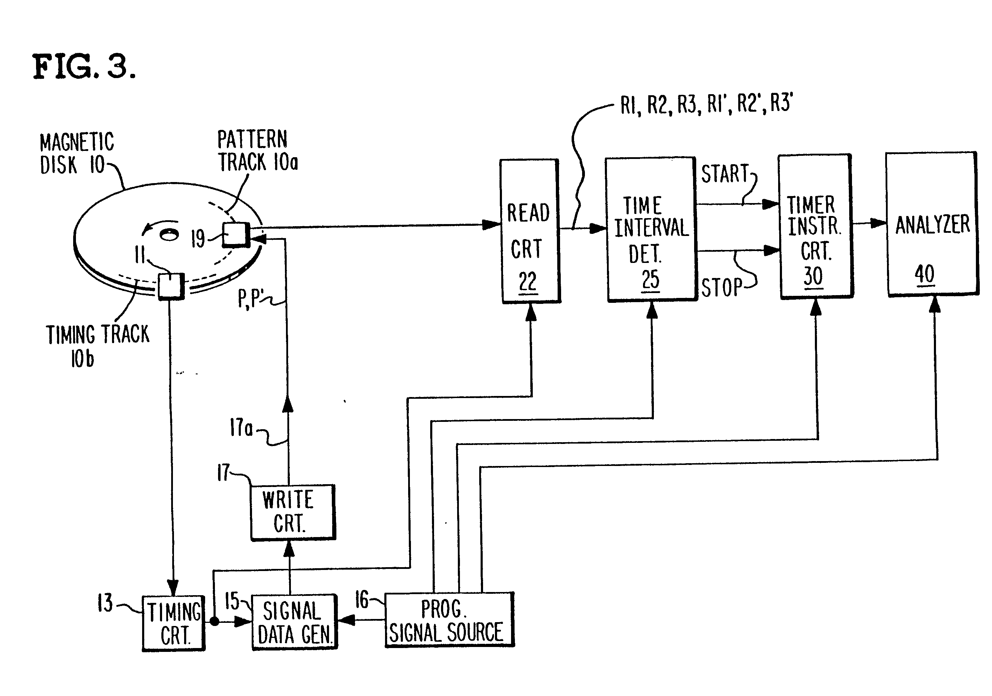

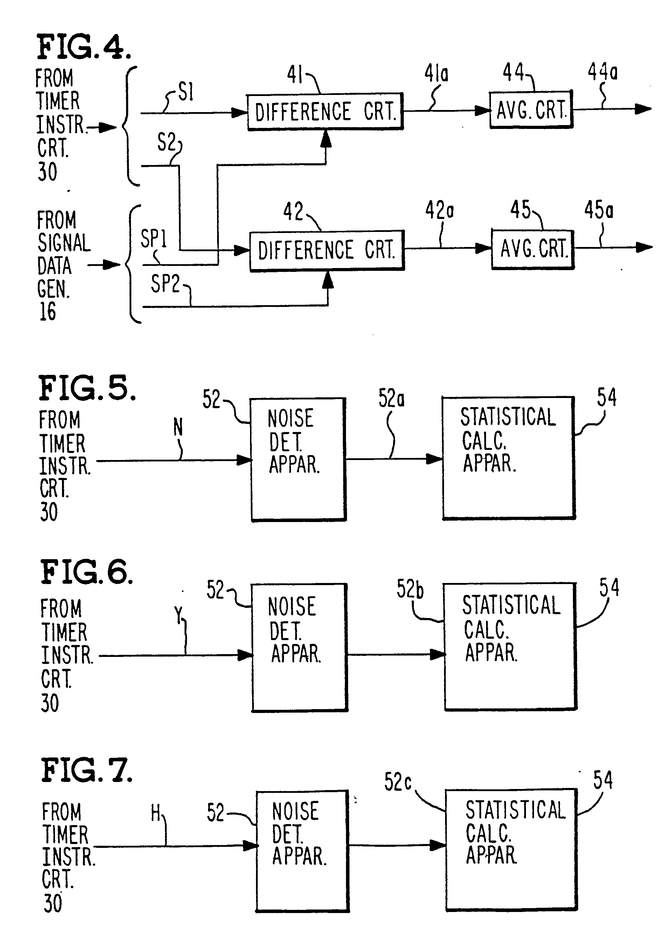

Initially, a preferred example of the basic improved testing method of the invention will be considered with reference to Figs. 1 and 2.

Fig. 1 is a graph illustrating predetermined complementary patterns P and P' which are written many times around a track of a disk. It will be noted that the complementary patterns P and P' differ in that corresponding transitions of P and P' are in opposite directions in Fig. 1. As shown, each pattern (P or P') comprises a first transition (TR1 or TR1') followed by a relatively widely spaced second transition (TR2 or TR2') which in turn is followed by a relatively closely spaced transistion (TR3 or TR3'). In a preferred embodiment, relatively closely spaced transitions TR2, TR3 and TR2', TR3' in patterns P and P' are chosen to have respective spacings TP4 and TP4' corresponding to the closest transition spacing to be detected by the head being tested, while the relatively widely spaced transitions TR1, TR2 and TR1', TR2' in patterns P and P' are chosen to have respective spacings TP1 and TP1' such that the detected location obtained for transitions TR1 and TR1' on readback will not be affected by adjacent transitions. The respective spacings TP3 and TP3' between patterns P and P' are likewise chosen so that the transitions in adjacent patterns P and P' do not affect the detected locations of transitions TR1 and TR1'.

Fig. 2 illustrates typical detected pulses R1, R2, R3 and R1', R2', R3' derived from readback of the respective corresponding transitions TR1, TR2, TR3 and TR1', TR2', TR3' in the patterns P and P' in Fig. 1. In the preferred embodiment in accordance with the invention, the most significant time interval measurements are the time intervals T1, T2 and T3 for pattern P and the time intervals T1', T2' and T3' for pattern P', which correspond to transition spacings TP1, TP2, TP3, TP1', TP2' and TP3', respectively, in Fig. 1. As shown in Fig. 2 for the pattern P, T1 is the time interval between the detection of pulses R2 and R1, T2 is the time interval between the detection of pulses R3 and R1, and T3 is the time interval between the detection of pulses R1' and R1. Similarly, for pattern P', T1' is the time interval between the detection of pulses R2' and R1', T2' is the time interval between the detection of pulses R3' and R1' and T3' is the time interval between the detection of pulses R1 and R1'. It has been found that by analyzing the differences between these time intervals T1, T2, T3 and T1', T2', T3' derived from playback and those that would ideally be obtained for the corresponding transition spacings TP1, TP2, TP3 and TP1', TP2', TP3' in Fig. 2 for the many patterns P and P' written around a disk track, it is possible to rapidly and accurately determine a surprising number of highly significant magnetic characteristics indicative of system performance.

Reference is now directed to Fig. 3 which illustrates a particular example of preferred apparatus in accordance with the invention.

As shown in Fig. 3, a rotatable magnetic disk 10 is provided of the type which is to be used with the magnetic heads to be tested. The disk 10 can be prewritten with the patterns P and P' (Fig. 1) in pattern track 10a, or else, these patterns could be written in pattern track 10a by the head 12 under test in order to test the head's write performance. Writing of the patterns P and P' in track 10a, for example, is accomplished using a timing track 10b which is read by a magnetic head 11 (or some other suitable tranducer) to provide disk timing signals to timing circuitry 13 for providing appropriate timing signals (synchronized with disk rotation) to a conventional form of signal data generator 15. The signal data generator 15 operates in response to input control signals from a conventional programmable signal source 16 for applying predetermined pattern signals (corresponding to P and P' in Fig. 1) to conventional write circuitry 17 which, in response to timing signals from timing circuitry 13, provides appropriate write signals 17a to a magnetic head 19 for writing the patterns P and P' (Fig. 1) in the pattern track 10a.

Still with reference to Fig. 3, when read performance is to be tested, the head 19 is caused to read the patterns P and P' (Fig. 1) in the pattern track 10a and the resultant head output is applied to conventional read circuitry 22 which produces detected output pulses R1, R2, R3, R1', R2', R3', such as illustrated in Fig. 2. For this purpose, the read circuitry 22 may also receive disk timing signals from timing circuitry 13. The speed of rotation of the disk 10 should preferably be the same as that which will be used when the system is operated.

The detected pulses R1, R2, R3, R1', R2', R3' (Fig. 2) from the read circuitry 22 in Fig. 3 are applied to a conventional form of time interval detector 25 which serves as a pattern recognizer and is capable of distinguishing the applied pulses R1, R2, R3, R1', R2', R3'. Under the control of the signal source 16, time interval detector 25 produces start and stop output signals corresponding to the beginning and end, respectively, of particular selected timing intervals occuring between the applied pulses R1, R2, R3, R1', R2', R3'.

The start and stop output signals produced by the time interval selector 25 are in turn applied to timer instrumentation circuitry 30 which may also be of conventional form. The timer instrumentation circuitry 30 operates in a conventional manner to accurately measure the time between each corresponding pair of start and stop pulses received from the time interval detector 25 and to apply signals, representative of the resulting time interval measurements to analyzing circuitry 40. The analyzing circuitry 40 also receives signals from source 16 related to the time intervals between particular ones of the transistions TR1, TR2, TR3, TR1', TR2', TR3' of the patterns P and P' shown in Fig. 1.

In accordance with the preferred embodiment of the present invention being considered herein, the important timing intervals to be analyzed are the recorded transition intervals TP1, TP2, TP3, TP1', TP2', TP3' of patterns P and P' (Fig. 1) and the corresponding playback time intervals T1, T2, T3, T1', T2', T3' derived from pulses R1, R2, R3, R1', R2', R3' (Fig. 2). By analyzing the differences between corresponding ones of these particular recording and playback timing intervals, accurate measurements can be derived indicative of pattern induced bit shift (both left and right), noise induced bit shift, and also bit shift caused by noise. Additionally, a measurement of timing asymmetry can also be derived. Accordingly, in order to provide for the analysis of these intervals by the analyzing circuitry 40 in Fig. 3, the time interval detector 25 is adapted to provide start and stop output signals to the timer instrumentation circuitry 30 corresponding to the playback timing intervals T1, T2, T3, T1′, T2′, T3′ intervals in Fig. 2, and the signal source 16 is caused to provide signals to the analyzing circuitry 40 representative of the corresponding recorded transition intervals TP1, TP2, TP3, TP1′, TP2′, TP3′.

It is to be understood that the analyzer 40 may be implemented by hardware, by an appropriately programmed computer, or by a combination of both. For the purposes of this discription, the various analyzer functions will be illustrated as being implemented by readily providable components, such as illustrated in Figs. 4—7. From the description provided, one skilled in the art will readily be able to provide an appropriately programmed computer to perform all or any desired portion of these analyzer functions.

The manner in which pattern induced bit shift is determined in the preferred embodiment will first be considered. It will be understood with reference to Figs. 1 and 2 that the difference between the timing intervals TP1 and T1 and between TP1′ and T1′ will be a measure of left bit shift, while the difference between the timing intervals TP2 and T2 and between TP2′ and T2′ will be a measure of right bit shift. The left and right bit shift measured for a single recorded pattern P or P′ in Fig. 1 will, of course, include not only the pattern induced bit shift, but also any bit shift which may be caused by media irregularities local to the individual recorded transitions of the pattern, as well as any bit shift which may be caused by instantaneous noise occurring concurrently with the detection of the first and last pulses of the interval. In the preferred embodiment of the invention, the pattern induced left and right bit shifts are advantageously derived by averaging the differences measured between the respective intervals TP1 and T1 and TP1′ and T1′ (for left pattern induced bit shift) and between TP2 and T2 and TP2′ and T2′ (for right pattern induced bit shift) of the many patterns P and P′ recorded around the pattern track 10a (Fig. 3), thereby substantially removing bit shift effects caused by media irregularities and noise.

An exemplary implementation which may be provided in the analyzer 40 for obtaining pattern induced bit shift in accordance with the foregoing is illustrated in Fig. 4. It will be seen in Fig. 4 that for this purpose the analyzer 40 includes difference circuits 41 and 42 feeding averaging circuits 44 and 45, respectively. The difference circuit 41 receives signals S1 from the timer instrumentation circuitry 30 which are representative of the time intervals T1 and T1′ and also receives signals SP1 from the signal source 16 which are respresentative of the time intervals TP1 and TP1′. The difference circuit 42 receives signals S2 which are representative of the time intervals T2 and T2′ from the timer instrumentation circuitry 30 and also receives signals SP2 from the signal source 16 which are representative of the time intervals TP2 and TP2′. These difference circuits 41 and 42 operate to successively produce output signals 41a and 42a, respectively, which are representative of the measured differences obtained between corresponding ones of the applied time intervals as the disk 10 is rotated. These output signals 41a and 42a produced by the difference circuits 41 and 42, respectively, are applied to respective averaging circuits 44 and 45 to produce output signals 44a and 45a representative of the average of the measured differences applied thereto. From the previous discussion, it will be understood that the output signals 44a and 45a thus respectively represent the pattern induced left and right bit shifts.

Next to be considered with additional reference to Fig. 5 is an exemplary implementation which may be provided in the analyzer 40 in Fig. 3 for measuring noise induced bit shift. As is well known, by registering the statistical time distribution of a received pulse, the jitter of the pulse can be determined. Noise detection apparatus for obtaining jitter in this manner are well known in the art. In the preferred embodiment of the invention, the jitter on the readback pulses is advantageously employed as an indication of noise induced bit shift. Accordingly, while the disk is rotating, time instrumentation circuitry 30 in Fig. 3 provides signals N representative of at least one of the readback time intervals T1, T2, T3, T1′, T2′, T3′ to conventional noise detection apparatus 52 for determining the jitter on the individual readback pulses as the disk is rotated. The jitter output signal 52a produced by the noise detection apparatus is applied to conventional statistical calcuation apparatus 54 to obtain an indication of the standard deviation of the jitter. In the preferred embodiment of the invention being considered, this standard deviation is used as a measure of noise induced bit shift.

Reference is next directed to Fig. 6 illustrating an exemplary implementation which may be provided in the analyzer 40 in Fig. 3 for measuring timing asymmetry. It will be understood that timing asymmetry is present when the measured interval between the readback of a first occurring positive-going transition of a recorded pattern and the readback of a later occurring negative-going transition is different from the time interval between the readback of a first occuring negative-going transition and the readback of a later occurring positive-going transition.

It will be understood with reference to Figs. 1 and 2 that each time interval T1 in Fig. 2 is an example of a readback time interval corresponding to a recorded time interval (TP1 in Fig. 1) which begins with a positive-going transition (TR1) and ends with a negative-going transition (TR2), while each time interval T1' in Fig. 2 is an example of a readback time interval corresponding to a recorded time interval (TP1') which begins with a negative-going transition (TR1') and ends with a positive-going transistion (TR2'). It will be noted that readback intervals T3 and T3' have the same relationship as intervals T1 and T1' in this regard. Thus, the jitter detected between T1 and T1' or between T3 and T3' will be dependent upon head timing asymmetry. However, this jitter will also be affected by noise. In order to remove the effect of noise, the jitter detected between T1 and T1' or between T3 and T3' is compared with the jitter detected for the time interval T2 or T2', which is essentially unaffected by timing asymmetry (since both T2 and T2') correspond to beginning and ending transitions which change in the same direction).

Accordingly, with reference to the exemplary implementation for measuring timing asymmetry shown in Fig. 6, it will be understood that, while the disk is rotating, the timing instrumentation circuitry 30 applies signals Y representative of at least one pair of the intervals T1 and T1' or T3 and T3' and at least one of the intervals T2 or T2' to noise detection apparatus 52 which may be the same as illustrated in Fig. 5. The noise detection apparatus 52 determines the comparative jitter between T2 or T2' and the applied pair T1 and T1' or T3 and T3' and applies a resultant jitter signal 52b corresponding thereto to statistical calculation apparatus 54 which may also be the same as illustrated in Fig. 5. The standard deviation of this jitter signal 52b is used as an indication of timing asymmetry.

As pointed out in the previous paragraph, the time intervals T2 and T2' in Fig. 2 are essentially unaffected by any timing asymmetry. However, these intervals are affected by noise, thereby providing a convenient way of also determining noise. Thus, as illustrated in Fig. 7, the timer instrumentation circuiry 30 applies signals H representative of at least one of the intervals T2 or T2' to noise detection apparatus 52 which in turn provides a jitter signal 52c to statistical calculation apparatus 54. The standard deviation of this jitter signal is used as an indication of bit shift caused by noise. The noise cancellation apparatus 52 and the statistical calculation apparatus 54 may be the same as in Figs. 5 and 6.

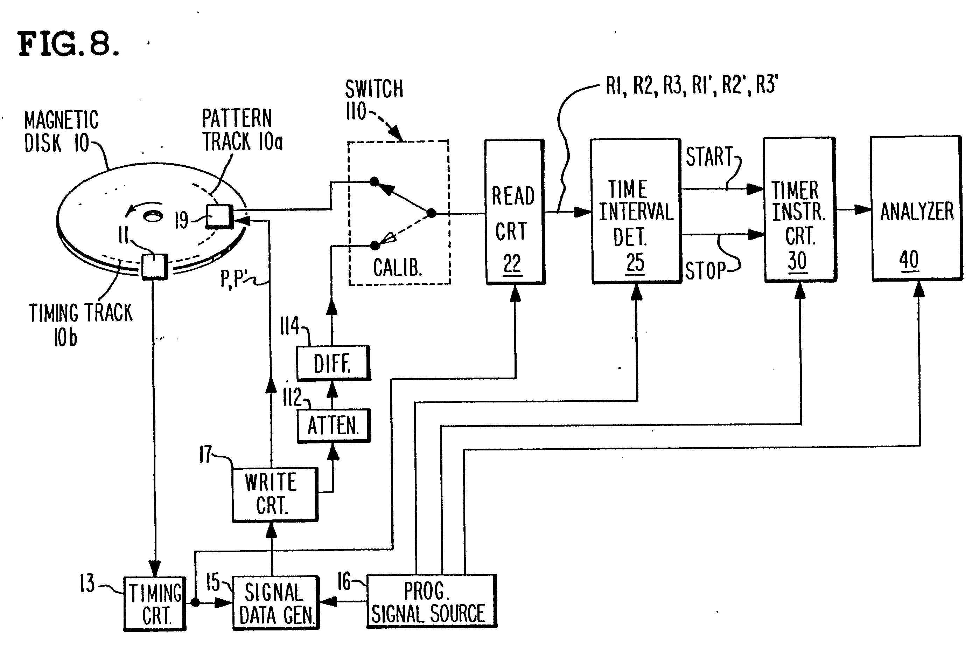

Reference is next directed to Fig. 8 illustrating an improvement over the embodiment of Fig. 3 which provides for calibrating the system using the same write signals as used for writing the patterns P and P' in Fig. 1. As will be evident, the difference between the embodiments of Figs. 3 and 8 resides in the provision of a switch 110 at the input to the read circuitry 22 which permits selecting either read signals from the head 19 or write signals from the write circuitry 17 applied via an attenuator 112 and a differentiator 114. The purpose of the attenuator 112 and differentiator 114 is to convert the write signals into "idealized" read signals for calibrating the system.

Thus, for calibrating purposes, the switch 110 is placed in its calibrate position to receive the "idealized" read signals provided at the output of the differentiator 114, and the various measurements previously described are then obtained. The differences between these measurements and those obtained for actual read signals will then provide more accurate resultant values.

**Claims**

1. A method for measuring the properties of a magnetic storage system having a magnetic storage medium (10) traversed by a magnetic head (19a) the method including the steps of: recording a test pattern (TR1 TR2 TR3 TR1' TR2' TR3' TR1'') on a track (10a) on the medium (10), the test pattern (TR1 TR2 TR3 TR1' TR2' TR3' TR1'') having a plurality of manifestations of a first type each comprising a magnetic transition of a first sense (TR1 TR3 TR2' TR1'') alternating with manifestations of a second type each comprising a magnetic transition of a second sense (TR2 TR1' TR3') opposite to said first sense; employing said head (19a) to recover signals (using 22) from said test pattern (TR1 TR2 TR3 TR1' TR2' TR3' TR1''); and measuring time (using 25, 30 & 40) between the peaks (R1 R2 R3 R1' R2' R3' R2'') of the recovered signal to measure deviation from an ideal value, characterised in that said test pattern comprises a plurality of first intervals (TP1 or TP3) each substantially equal to a first predetermined period which is relatively long and each commenced by a manifestation of said first type (TR1) and terminated by a manifestation of said second type (TR2 or TR1'); a plurality of second intervals (TP1' or TP3') each substantially equal to said first predetermined period and each commenced by a manifestation of said second type (TR1') and terminated by a manifestation of said first type (TR2' or TR1''); a plurality of third intervals (TP4) each substantially equal to a second predetermined period which is relatively short and each commenced by a manifestation of said second type (TR2) and terminated by a manifestation of said first type (TR3); and a plurality of fourth intervals (TP4') each substantially equal to said second predetermined period and each commenced by a manifestation of said first type (TR2') and terminated by a manifestation of said second type (TR3'); and in that said method further includes making first measurements of the difference between each first interval (TP1 or TP3) of the test pattern and the time (T1 or T3) elapsing between the recovered signal peaks (R1 & R2 or R1') corresponding to each first interval (TP1 or TP3) and the difference between the second interval (TP1' or TP3') of the test pattern and the time (T1' or T3') elapsing between the peaks (R1' & R2' or R1'') corresponding to each second interval (TP1' or TP3'); making second measurements of the difference between the time (T2) elapsing between the recovered signal peaks (R1 & R3) corresponding respectively to the commencement of each first interval (TP1 or TP3) and the termination of each third interval (TP4) and the respective interval (TP2) of the test pattern and between the time (T2') elapsing between the recovered signal peaks (R1' and R3') corresponding respectively to the commencement of each second interval (TP1' or TP3') and the termination of each fourth interval (TP4') and the respective interval (TP2') of the test pattern, and comparing said first and second measurements.

2. A method according to Claim 1, characterised in that said first predetermined period is sufficiently long for the manifestations (TR1 or TR1'), commencing said first (TR1) and second (TR1') intervals to have substantially no effect on the timing of the peaks (R2, R3, R2', R3') corresponding to the termination of said time intervals.

3. A method according to any of the preceding claims, characterised in that said second predetermined period corresponds to the closest spacing between manifestations to be detected by said head (19a).

**Patentansprüche**

1. Prüfverfahren für Bestandteile eines magnetischen Speichersystems mit einem magnetischen Speichermedium (10), das von einem Magnetkopf (19a) durchlaufen wird, wobei das Verfahren folgende Schritte aufweist: Aufnahme eines Testmusters (TR1 TR2 TR3 TR1' TR2' TR3' TR1") auf einer Spur (10a) auf dem Medium (10), wobei das Testmuster (TR1 TR2 TR3 TR1' TR2' TR3' TR1") mehrere Erscheinungsformen einer ersten Art hat, von denen jede eine magnetische Umwandlung eines ersten Sinns (TR1 TR3 TR2' TR1") aufweist, die mit Erscheinungsformen einer zweiten Art alterniert, von denen jede eine magnetische Umwandlung eines zweiten Sinns (TR2 TR1' TR3') entgegengestzt zum ersten Sinn aufweist; Verwendung des Kopfes (19a), um Signale (unter Verwendung des Kopfes (19a), um Signale (unter Verwendung von 22) aus dem Testmuster (TR1 TR2 TR3 TR1' TR2' TR3' TR1") zu gewinnen; und Messung der Zeit (unter Verwendung von 25, 30 und 40) zwischen den Spitzenwerten (R1 R2 R3 R1' R2' R3' R1") des gewonnenen Signals, um die Abweichung vom Idealwert zu messen, dadurch gekennzeichnet, daß das Testmuster folgende Merkmale aufweist: mehrere erste Intervalle (TP1 oder TP3), von denen jedes im wesentlichen gleich einer ersten vorherbestimmten Zeitspanne ist, welche relativ lang ist, und jede mit einer Erscheinungsform der ersten Art (TR1) beginnt und mit einer Erscheinungsform der zweiten Art (TR2 oder TR1') endet; mehrere zweite Intervalle (TP1' oder TP3'), von denen jede im wesentlichen gleich der ersten vorherbestimmten Zeitspanne ist und jede mit einer Erscheinungsform der zweiten Art (TR1') beginnt und mit einer Erscheinungsform der ersten Art (TR2' oder TR1") endet; mehrere dritte Intervalle (TP4), von denen jede im wesentlichen gleich einer zweiten vorherbestimmten Zeitspanne ist, die relativ kurz ist, und jeder mit einer Erscheinungsform der zweiten Art (TR2) beginnt und mit einer Erscheinungsform der ersten Art (TR3) endet; und mehrere vierte Intervalle (TP4'), von denen jede im wesentlichen gleich der zweiten vorherbestimmten Zeitspanne ist und jede mit einer Erscheinungsform der ersten Art (TR2') beginnt und mit einer Erscheinungsform der zweiten Art (TR3') endet; und daß das Verfahren ferner folgende Merkmale enthält; eine Durchführung erster Messungen der Differenz zwischen jedem ersten Intervall (TP1 oder TP3) des Testmusters und der Zeit (T1 oder T3), die zwischen den gewonnenen Signalspitzen (R1 und R2 oder R1') verge, welche jedem ersten Intervall (TP1 oder TP3) entsprechen, und der Differenz zwischen dem zweiten Intervall (TP1' oder TP3') des Testmusters und der Zeit (T1' oder T3'), die zwischen den Signalspitzen (R1' und R2' oder R1") vergeht, welche jedem zweiten Intervall (TP1' oder TP3') entsprechen; Durchführung von zweiten Messungen der Differenz zwischen der Zeit (T2), die zwischen den gewonnenen Signalspitzen (R1 und R3) vergeht, welche jeweils dem Anfang jedes ersten Intervalls (TP1 oder TP3) und dem Ende jedes dritten Intervalls (TP4) entsprechen, und dem entsprechenden Intervall (TP2) des Testmusters und zwischen der Zeit (T2'), die zwischen den gewonnenen Signalspitzen (R1' und R3') vergeht, welche jeweils dem Anfang jedes zweiten Intervalls (TP1' oder TP3') und dem Ende jedes vierten Intervalls (TP4') entspechen, und dem entsprechenden Intervall (TP2') des Testmusters, und Vergleich der ersten und zweiten Messungen.

2. Verfahren nach Anspruch 1, dadurch gekennzeichnet, daß das erste vorherbestimmte Zeitintervall für die Erscheinungsformen (TR1 oder TR1') ausreichend lang ist, welch die ersten (TP1) und zweiten (TP1') Intervalle einleiten, um im wesentlichen keine Wirkung auf die Zeitpunkte der dem Ende der Zeitintervalle entsprechenden Signalspitzen (R2, R3, R2', R3') zu haben.

3. Verfahren nach einem der vorangegangenen Ansprüche, dadurch gekennzeichnet, daß die zweite vorherbestimmte Zeitfolge dem dichtesten Abstand zwischen den vom Kopf (19a) zu erfassenden Erscheinungsformen entspricht.

**Revendications**

1. Procédé pour mesurer les propriétés d'un système de mémoire magnétique ayant un support d'enregistrement magnétique (10) parcouru par une tête magnétique (19a), procédé comprenant les étapes suivantes: on enregistre un schéma d'essai (TR1, TR2, TR3, TR1', TR2', TR3', TR1") sur une piste (10a) du support (10), le schéma d'essai (TR1, TR2, TR3, TR1', TR2', TR3', TR1") ayant un ensemble de manifestations d'un premier type avec chacune une transition magnétique dans un premier sens (TR1, TR3, TR2', TR1") alternant avec des manifestations d'un second type correspondant à une transition magnétique d'un second sens (TR2, TR1', TR3') opposée à celle du premier sens; on utilise la tête (19a) pour récupérer les signaux (à l'aide de 22) du schéma d'essai (TR1, TR2, TR3, TR1', TR2', TR3', TR1") et on mesure le temps (à l'aide de 22, 30 et 40) entre les pics (R1, R2, R3, R1', R2', R3', R2") du signal récupéré pour mesurer la déviation par rapport à la valeur idéale, procédé caractérisé en ce que le schéma comprend un ensemble de premiers intervalles (TP1 ou TP3) chacun pratiquement égal à une première période prédéterminée qui est relativement longue et qui commence chacune par une manifestation du premier type (TR1) et qui se termine par une manifestation du second type (TR2 ou TR1'); un ensemble de seconds intervalles (TP1', TP3') chacun pratiquement égal à la première période prédéterminée, chacun commençant par une manifestation du second type (TR1') et se terminant par une manifestation du premier type (TR2' ou TR1''); un ensemble de premiers intervalles (TP4) chacun pratiquement égal à une seconde période prédéterminée que est relativement courte et qui commence chacune par une manifestation du second type (TR2) et se termine par une manifestation du premier type (TR3) ainsi qu'un ensemble de quatrièmes intervalles (TP4) chacun pratiquement égal à la seconde période prédéterminée et chacun commençant par une manifestation du premier type (TR2') et se terminant par une manifestation du second type (TR3'), ce procédé consistant en outre à faire des premières mesures de la différence entre chaque premier intervalle (TP1 ou TP3) du schéma d'essai et du temps (T1 ou T3) qui s'écoule entre les pics de signaux récupérés (R1 et R2 ou R1') correspondant à chaque premier intervalle (TP1 ou TP3) et la différence entre le second intervalle (TP1' ou TP3') du schéma d'essai et le temps (T1' ou TR3') qui s'écoule entre les pics (R1' et R2' ou R1") correspondant à chaque second intervalle (TP1' ou TP3'); on fait des secondes mesures de la différence entre le temps (T2) qui s'écoule entre les pics des signaux récupérés (R1 et R3) correspondant respectivement au début de chaque premier intervalle (TP1 ou TP3) et la fin de chaque troisième intervalle (TP4) et l'intervalle respectif (TP2) du schéma d'essai et entre le temps (T2') qui s'écoule entre les pics des signaux récupérés (R1' et R3') correspondant respectivement au début de chaque second intervalle (TP1' ou TP3') et la fin de chaque quatrième intervalle (TP4') et l'intervalle respectif (TP2') du schéma d'essai et on compare les première et seconde mesures.

2. Procédé selon la revendication 1, caractérisé en ce que la première période prédéterminée est suffisamment longue pour les manifestations (TR1 ou TR1') , en commençant par le premier intervalle (TR1) ou le second intervalle (TR1') pour n'avoir pratiquement pas d'effet sur le temps des pics (R2, R3, R2', R3') correspondant à la fin des intervalles de temps.

3. Procédé selon l'une quelconque des revendications précédentes, caractérisé en ce que la seconde période prédéterminée correspond à l'espacement le plus réduit entre les manifestations à détecter par la tête (19a).

FIG.1.

FIG.2.

EP 0 167 284 B1

# FIG. 3.

RI, R2, R3, RI', R2', R3'

MAGNETIC DISK 10

PATTERN TRACK 10a

TIMING TRACK 10b

READ CRT 22

TIME INTERVAL DET. 25

START

STOP

TIMER INSTR. CRT. 30

ANALYZER 40

P,P'

17a

17 WRITE CRT.

13 TIMING CRT.

15 SIGNAL DATA GEN.

16 PROG. SIGNAL SOURCE

EP 0 167 284 B1

## FIG.4.

FROM TIMER INSTR. CRT. 30

S1 → DIFFERENCE CRT. 41 →41a→ AVG. CRT. 44 →44a→

S2

FROM SIGNAL DATA GEN. 16

SP1 → DIFFERENCE CRT. 42 →42a→ AVG. CRT. 45 →45a→

SP2

## FIG.5.

FROM TIMER INSTR. CRT. 30

N → NOISE DET. APPAR. 52 →52a→ STATISTICAL CALC. APPAR. 54

## FIG.6.

FROM TIMER INSTR. CRT. 30

Y → NOISE DET. APPAR. 52 →52b→ STATISTICAL CALC. APPAR. 54

## FIG.7.

FROM TIMER INSTR. CRT. 30

H → NOISE DET. APPAR. 52 →52c→ STATISTICAL CALC. APPAR. 54

# FIG.8.

SWITCH 110

RI, R2, R3, RI', R2', R3'

MAGNETIC DISK 10

PATTERN TRACK 10a

TIMING TRACK 10b

CALIB.

READ CRT. 22

TIME INTERVAL DET. 25

START

STOP

TIMER INSTR. CRT. 30

ANALYZER 40

P,P'

114 — DIFF.

112 — ATTEN.

17 — WRITE CRT.

13 — TIMING CRT.

15 — SIGNAL DATA GEN.

16 — PROG. SIGNAL SOURCE

EP 0 167 284 B1